# EUROPEAN PATENT APPLICATION

(11) **EP 4 571 805 A1**
(43) Date of publication of application: **18.06.2025**
(21) Application number: 23871909.0
(22) Date of filing: 13.09.2023
(51) Int. Cl.: H01G 11/82, H01G 9/008, H01G 11/70, H01M 10/04, H01M 50/536, H01M 50/545, H01M 50/548, H01M 50/566, H01M 50/567

(54) **ELECTRICITY STORAGE DEVICE AND METHOD FOR MANUFACTURING SAME**

(30) Priority: 27.09.2022 JP 2022153397
(71) Applicant: Nippon Chemi-Con Corporation, Tokyo 141-8605 (JP)
(72) Inventor: KUROKI, Takashi, Tokyo 141-8605 (JP); KAWASAKI, Yusuke, Tokyo 141-8605 (JP)
(74) Representative: Mewburn Ellis LLP
(86) International application number: PCT/JP2023/033290
(87) International publication number: WO 2024/070676

(57) **Abstract**

This electricity storage device includes an electricity storage element in which an electrode portion having a different polarity is formed on each of end surfaces of electrode foils that are layered and wound; a case having a housing portion housing the electricity storage element therein; and a current collecting component including a first connection surface portion placed on a bottom portion side of the housing portion and connected to the electrode portion formed on one end surface of the electricity storage element, and a second connection surface portion connected to an inner wall surface of the case in the housing portion. Consequently, it can be realized to ensure a large connection area of the electricity storage element and the case to the current collecting member to enhance the connectivity, and to facilitate a manufacturing work of the electricity storage device.

## Description

### Technical Field

A technology of the present disclosure relates to a connection technology between an electricity storage element and a case, as to an electricity storage device in which a part of a case in which the electricity storage element is accommodated is used as an external terminal.

### Background Art

In an electricity storage device in which an electricity storage element in which an anode foil and a cathode foil are layered and wound is used, for example, an external terminal on the anode side or the cathode side may be made by connecting to a current collecting plate placed on each winding end face or by connecting the case in which the electricity storage element is housed and the winding end face (for example, Patent Literatures 1 and 2).

### Citation List

### Patent Literature

Patent Literature 1: JP 2008-159530 A
Patent Literature 2: JP 2002-352789 A

### Summary of Invention

### Technical Problem

However, in an electricity storage device having a part of the case as an external terminal, a method of connecting with the electrode portion of the electricity storage element and the inner wall surface of the case by welding treatment to a flat plate-shaped current collecting member interposed between the electricity storage element and the case is adopted. Since downsizing and high capacity of the electricity storage device is required, a storage unit is formed of a volume capable of housing the electricity storage element, the current collecting member, an electrolyte, and the like, that are necessary components.

In order to cope with space saving of such a storage unit, in the electricity storage device, one surface side of a current collecting component placed between the bottom surface of the storage unit and the electricity storage element is connected to the electricity storage element, and an opposite surface of the current collecting component is connected to the case. Welding is used for the connecting to the current collecting component. At this time, in the current collecting plate, for example, when a welded portion connecting to the case is close to a welded portion connecting to the electricity storage element, or when the welded portions are overlapped, there is a risk of causing a decrease in connection strength to the electricity storage element or the case or deterioration of a component due to heat transfer of welding. In addition, when such welded portions overlap, there is a risk of causing strength deterioration including cracks, breakage, and the like to the current collecting plate by welding.

On the contrary, in order to avoid the welded portion, if welding areas for the electricity storage element and the case are reduced, the connection strength decreases and there is a risk that resistance to vibration and impact applied to the electricity storage device is reduced. In addition, in the connection between the current collecting plate and the case, advanced technology is required to perform welding with avoiding the welded portion between the electricity storage element and the current collecting plate, and there is a risk of reducing the workability of manufacturing the electricity storage device.

In an electricity storage device having a part of a case as an external terminal, as to the connection process of the current collecting component to the electricity storage element and the case, inventors of the technology of the present disclosure obtains a knowledge that an assembly processing can be simplified while ensuring sufficient connection strength by connecting them to different surfaces.

Patent Literature 1 and 2, which do not disclose or suggest this problem, cannot solve this problem.

Therefore, the purpose of the technology of the present disclosure is to ensure a large connection area of the electricity storage element and the case to the current collecting member to enhance the connectivity, and to facilitate a manufacturing work of the electricity storage device.

### Solution to Problem

In order to achieve the above-described purpose, one aspect of an electricity storage device of the present disclosure includes: an electricity storage element in which an electrode portion having a different polarity is formed on each of end surfaces of electrode foils that are layered and wound; a case having a housing portion housing the electricity storage element therein; and a current collecting component including a first connection surface portion placed on a bottom portion side of the housing portion and connected to the electrode portion formed on one end surface of the electricity storage element, and a second connection surface portion connected to an inner wall surface of the case in the housing portion.

In the electricity storage device, the current collecting component includes the first connection surface portion that is connected to the electrode portion by welding treatment, and the second connection surface portion that is connected to the inner wall surface of the case by swaging treatment or welding treatment to an outer peripheral portion of the case.

In the electricity storage device, the current collecting component is formed in a bottomed cylindrical shape and includes a bottom plate portion covering the one end surface of the electricity storage element and a vertical wall portion covering a part of a side surface of the electricity storage element.

In the electricity storage device, the second connection surface portion is formed in a range of 1/2 or less of a length in the housing portion from the bottom portion side along the inner wall surface of the case.

In the electricity storage device, the current collecting component has an opening formed in a part of the bottom plate portion.

In order to achieve the purpose, one aspect of a method for manufacturing an electricity storage device of the present disclosure includes: a step of layering and winding electrode foils and forming an electricity storage element having an electrode portion having a different polarity on each of end surfaces of the wound electrode foils; a step of placing a current collecting component on one end surface of the electricity storage element and connecting the electrode portion and a first connection surface portion of the current collecting component; a step of housing, in a housing portion of a case, the current collecting component and the electricity storage element that are connected; and a step of connecting an inner wall surface of the case and a second connection surface portion of the current collecting component in the housing portion.

In the method for manufacturing the electricity storage device, a step of connecting the first connection surface portion and the electrode portion by welding treatment from a back side of the first connection surface portion; and a step of connecting the second connection surface portion and the inner wall surface of the case by swaging treatment or welding treatment to an outer peripheral portion of the case are included.

In the method for manufacturing the electricity storage device, a step of impregnating electrolytic solution into the electricity storage element after connecting the electrode portion and the first connection surface portion of the current collecting component; and a step of housing the electricity storage element in the housing portion of the case after impregnating the electrolytic solution are further included.

### Advantageous Effects of Invention

According to technologies of the present disclosure, any of the following effects can be obtained.
(1) By differing the connection surfaces of the electricity storage element and the case to the current collecting member from each other, it is possible to prevent a decrease in connection strength to the current collecting member and prevent deterioration of the current collecting member.
(2) In a connection processing between the electricity storage element and the case, the work for the current collecting member can be facilitated.
(3) By setting a connection portion of the current collecting member and the electricity storage element and a connecting portion of the current collecting member and the case at different positions, their respective connection areas can be secured, and their respective connection strengths can be improved.
(4) The connection area between the current collecting member and the case can be increased, and the vibration resistance of the electricity storage element housed in the housing portion can be improved through the current collecting member.

Other purposes, features and advantages of the technologies of the present disclosure will be further clarified by referring to appended drawings and embodiments.

### Brief Description of Drawings

FIG. 1 is a cross-sectional view illustrating a configuration example of an electricity storage device according to a first embodiment.
FIG. 2 is a diagram illustrating a configuration example of an electricity storage element.
FIG. 3 is a cross-sectional view illustrating a configuration example of an electricity storage device according to a second embodiment.
FIG. 4 is a diagram illustrating a configuration example of an assembly processing of the electricity storage device.
FIG. 5 is a diagram illustrating an example of a current collecting component.
FIG. 6 is a cross-sectional view illustrating a configuration example of an electricity storage device according to a third embodiment.

### Mode(s) for Carrying out the Invention

### [First embodiment]

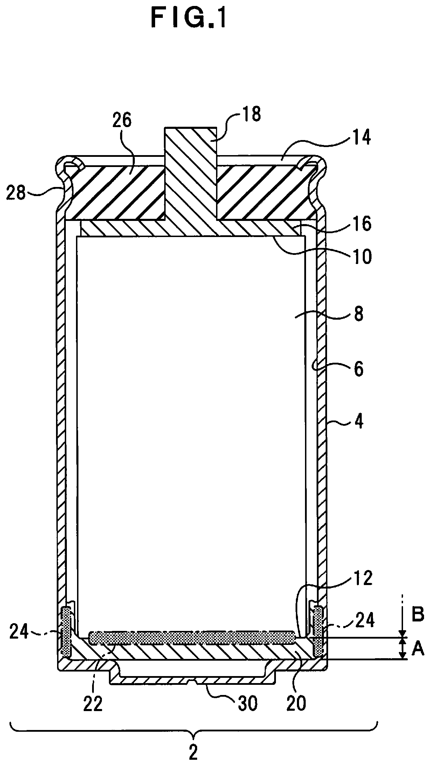

FIG. 1 illustrates a configuration example of an electricity storage device according to a first embodiment. The configuration illustrated in FIG. 1 is an example, and the technology of the present disclosure is not limited to such a configuration.

For example, an electricity storage device 2 illustrated in FIG. 1 is an example of an electric double layer capacitor, an electrolytic capacitor, a battery, and another electricity storage device, and an electricity storage element 8 and the electrolytic solution are housed in a housing portion 6 formed in a bottomed cylindrical exterior case 4, as illustrated in FIG. 1. The electricity storage device 2 is a so-called axial configuration device using the electricity storage element 8 in which electrode portions having different polarities of an anode tab 10 and a cathode tab 12 are formed on different end surfaces formed by being wound, for example. The electricity storage element 8 is housed in the exterior case 4 so that the anode tab 10 and the cathode tab 12 are faced toward an opening portion 14 side and the bottom side respectively, for example.

Further, in the electricity storage device 2, the anode tab 10 of the electricity storage element 8 is connected to a current collecting member 16 on the opening portion 14 side of the housing portion 6, and the cathode tab 12 of the electricity storage element 8 is connected to a current collecting member 20 on the bottom side. A plane portion facing an end surface of the electricity storage element 8 is formed in the current collecting member 16, for example, and the current collecting member 16 is provided with an external terminal 18 that is formed integrally with or connected to the flat plate surface and protrudes from the opening portion 14 toward the outside of the housing portion 6.

The external terminal 18 is an example of a terminal component for connecting the electricity storage device 2 to a substrate (not illustrated) or another electronic device to turn on the electricity, is formed smaller in diameter than the lateral width of the plane portion of the current collecting member 16, and is formed coaxially with or in the vicinity of the central axis of the current collecting member 16. The integrated current collecting member 16 and the external terminal 18 are placed in a reverse "T" shape in the housing portion 6 by connection with the electricity storage element 8, for example.

The current collecting member 20 is an example of a current collecting component of the present disclosure, and includes a connection surface portion 22 that is a part of a plane portion placed in parallel to the end surface of at least the electricity storage element 8 or in a state close to it and of which a surface facing the end surface of the electricity storage element 8 is connected to the cathode tab 12. The connection surface portion 22 is an example of the first connection surface portion of the present disclosure, and the plane portion and the cathode tab 12 are connected by welding treatment.

For example, the current collecting member 20 has a connection surface portion 24 formed on a part or the whole of a peripheral surface portion and is in contact with a part of an inner wall surface of the exterior case 4. The inner wall surface in contact with the connection surface portion 24 is a part of the exterior case 4 formed in a cylindrical shape and is a wall surface facing an outer peripheral surface of a foil of the electricity storage element 8 housed at least in the housing portion 6. The inner wall surface is formed, for example, in a curved surface shape equivalent to a wound shape of the electricity storage element 8. The connection surface portion 24 is an example of a second connection surface portion of the present disclosure and is a functional portion that electrically connects the exterior case 4 and the cathode side of the electricity storage element 8 through the current collecting member 20. To the connection surface portion 24, a swaging treatment in which a part of the exterior case 4 is deformed inward by pressing with a predetermined strength from the outer peripheral surface side of the exterior case 4 to be connected by contact with the current collecting member 20 placed in the housing portion 6 may be preferably performed or a welding treatment may be applied from the outer peripheral side of the exterior case 4.

More specifically, the current collecting member 20 has a plane portion formed, for example, in a size equal to or closer to the inner diameter of the housing portion 6 and has a predetermined thickness. In addition, an erected vertical wall having a predetermined height may be formed on the plane portion of the current collecting member 20 along a part of or all an outer peripheral portion of the plane portion, for example. As a result, the connection surface portion 24 is formed in a part of or all the plane portion or the vertical wall of the current collecting member 20 or in a part of or all the plane portion and the vertical wall, for example. If the connection surface portion 24 is formed by welding, it is preferable to set the welded portion within the range (region A) of the thickness of the plane portion of the current collecting member 20, for example. In addition, if the connection surface portion 24 is formed by swaging, it is preferable to swage inside of the range (region B) that is the range of the height of the vertical wall and does not include the cathode tab 12 of the electricity storage element 8, for example. In the welding treatment to the exterior case 4, it is necessary to avoid the influence on the exterior case 4 having a hollow and thin thickness by influence of the laser beam irradiation, for example. However, the position overlapping the placement position of the flat plate portion of the current collecting member 20 having a diameter equal to or closer to the inner diameter of the housing portion 6 and thick thickness is welded in the welding treatment in the region A; thus, it can be uninfluenced by the laser beam or the influence of the laser beam can be minimized. In addition, in the swaging treatment of the exterior case 4, a part of the exterior case 4 may be deformed at a position closer to the electricity storage element 8 side from the cathode tab 12 of the electricity storage element 8, that is, inside the housing portion, for example.

As described above, the swaging treatment is used to form the connection surface portion 24, and the exterior case 4, the electricity storage element 8, and the current collecting member 20 are deformed and integrated to enhance the seismic resistance of the electricity storage device 2 and the electricity storage element 8.

With such a configuration, in the electricity storage device 2, a part of the exterior case 4 conducting through the current collecting member 20 functions as an external terminal on the cathode side. The electricity storage device 2 may allow a lead wire (not illustrated) or another conductive component to connect with a substrate or an electronic component to be mounted, for example, or a terminal portion may be formed in a part of the exterior case 4.

In addition, the housing portion 6 of the exterior case 4 is sealed by a sealing member 26 placed on the opening portion 14 side after the electricity storage element 8 and the electrolytic solution are placed in the housing portion 6. At this time, for example, the exterior case 4 folds an end portion of the opening portion 14 into the inside of the housing portion 6, the exterior case 4 is pressed from the outer peripheral side at the placement position of the sealing member 26, so that the sealing member 26 and the exterior case 4 are in close contact with each other, and a swaged portion 28 is formed to be in a sealed state. The sealing member 26 is formed of, for example, an insulating rubber, another rubber material, or a resin material. The external terminal 18 protruding from the upper surface of the current collecting member 16 is inserted into a part of the sealing member 26. At this time, the sealing member 26 is in a pressure contact state with respect to the peripheral surface of the external terminal 18 and blocks contact between the housing portion 6 and the outside air through the peripheral surface of the external terminal 18.

Further, a bottom portion 30 of the exterior case 4 includes a valve mechanism that is open when the internal pressure rises due to the chemical reaction or the like of the electrolytic solution charged in the housing portion 6, for example.

In the housing portion 6, the plane portion of the current collecting member 20 may be in contact with the bottom surface portion of the housing portion 6, or the current collecting member 20 may be placed so that a gap is generated between the plane portion and the bottom surface portion.

### <Configuration of Electricity Storage Element 8>

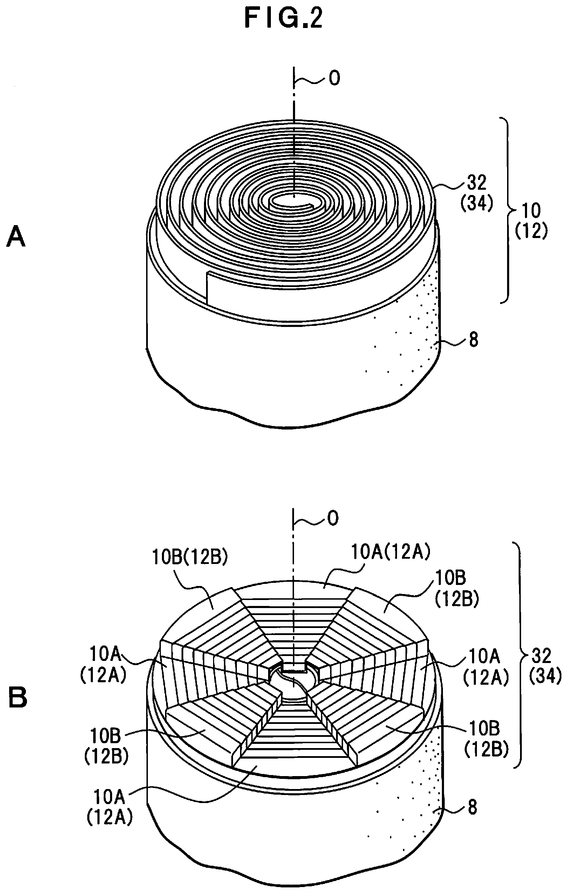

FIG. 2 illustrates a configuration example of an electricity storage element.

For example, the electricity storage element 8 is constituted by layering an anode foil and a cathode foil with a separator interposed therebetween and winding the layered body in a predetermined direction to constitute a cylindrical winding element.

For example, an aluminum foil is used as the base material in the anode foil and the cathode foil, and a polarizable electrode including an active material such as activated carbon, a binder and the like is formed on both surfaces of the aluminum foil.

The separator is formed wider than the anode foil and the cathode foil, and insulates the anode foil and the cathode foil.

In the anode foil, as illustrated in FIG. 2A, for example, an anode projection 32 is formed in one long side portion along the winding direction. In the cathode foil, for example, a cathode projection 34 is formed in the other long side portion along the winding direction.

The electricity storage element 8 is wound around the winding center while maintaining the layered state. As a result, a layered body of the anode projection 32 is formed on one side of the end surfaces of a wound body, and a layered body of the cathode projection 34 is formed on the other side. The formed-layered bodies of the anode projection 32 and the cathode projection 34 are each folded in a predetermined direction to form the anode tab 10 or the cathode tab 12.

In addition, for example, a holding tape may be wound around the electricity storage element 8, and the reverse of the winding of the anode foil and the cathode foil may be prevented.

In the winding end surface of the electricity storage element 8, as illustrated in FIG. 2B, for example, the erected anode projection 32 is divided into a plurality of sections for each predetermined angle in the circumferential direction with the winding center O as base. In the anode projection 32, for example, by pressing the mold or the like to the winding end surface for each other section, the first sections 10A in which the anode projection 32 is bent to make a deep bow and the second sections 10B in which it is bent so as to protrude higher than the first sections 10A are formed.

The first sections 12A and the second sections 12B are formed to the cathode projection 34 of the electricity storage element 8 in a manner similar to the manner of the anode projection 32.

In a forming processing of the anode tab 10 and the cathode tab 12, for example, the anode projection 32 or the cathode projection 34 may be bent to form the sections 10A and 10B, or 12A and 12B; then the forming processing may be performed so that it has a height in which it is able to be in close contact with the current collecting member 16 or 20. In the forming processing, for example, in order to stabilize the formation state of the anode tab 10 and the cathode tab 12, pressure may be applied to the anode tab 10 and the cathode tab 12 from the tip side toward the element end surface side by the pressing jig. By performing the forming processing in such a pressing, the anode tab 10 and the cathode tab 12 can prevent the rising of each section, and the welding areas and the contact areas with the current collecting members 16 and 20 can be increased.

For example, the plane portions of the current collecting members 16 and 20 may be placed on the anode tab 10 and the cathode tab 12 of the electricity storage element 8; then the current collecting member 16 and the current collecting member 20 may be welded and connected to the anode tab 10 and the cathode tab 12 by laser irradiation form the opposite surface thereof, respectively.

### <Effect of First Embodiment>

According to such a configuration, any of the following effects can be obtained.
(1) In the electrode portion in which a part of the exterior case 4 is regarded as an external terminal, the connection surface portions 22 and 24 of the electricity storage element 8 and the inner wall surface of the exterior case 4 to the current collecting member 20 are made different from each other, thereby preventing the connection processing portions such as welding from overlapping. As a result, the deterioration of the connection strength with the current collecting member 20 can be prevented, the concentration of the load on the current collecting member 20 can be avoided, and the deterioration can be prevented.
(2) Work such as forming the connection surface portion 24 with the exterior case 4 away from the connection surface portion 22 between the electricity storage element 8 and the current collecting member 20 becomes unnecessary, and the assembly workability of the electricity storage device 2 can be improved.
(3) The connection processing of the current collecting member 20 can be facilitated by setting the connection surfaces of the electricity storage element 8 and the exterior case 4 to the current collecting member 20 at different positions.
(4) By connecting the electricity storage element 8 and the exterior case 4 with different portions of the current collecting member 20, the connection areas can be sufficiently ensured, and the connection strength can be ensured.
(5) The connection area between the current collecting member 20 and the exterior case 4 can be increased, and the vibration resistance of the electricity storage element 8 housed in the housing portion 6 can be improved through the current collecting member 20.
(6) By connecting the outer peripheral portion of the current collecting member 20 to the exterior case 4, the seismic resistance and retentivity to the vibration or stress applied in a cross direction to the winding central axis of the electricity storage element 8 can be enhanced.

### [Second Embodiment]

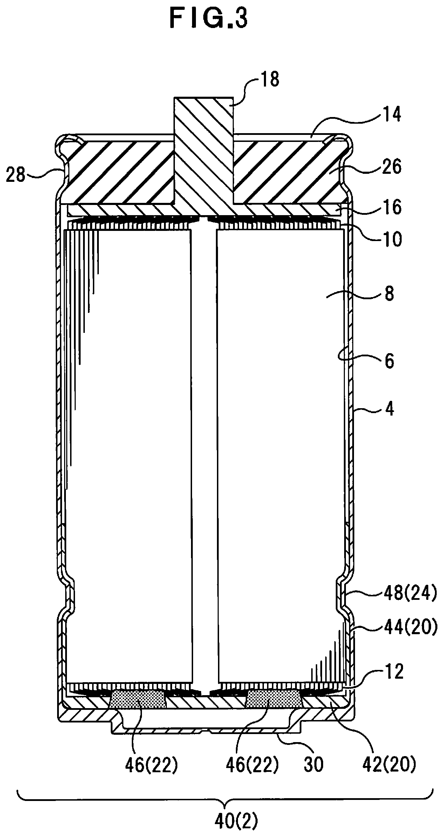

FIG. 3 illustrates a configuration example of an electricity storage device according to a second embodiment. The configuration illustrated in FIG. 3 is an example, and the technology of the present disclosure is not limited to such a configuration. In FIG. 3, the same portions as those in FIG. 1 are denoted by the same reference numerals.

An electricity storage device 40 of this embodiment includes, for example, together with the cathode tab 12 of the electricity storage element 8 to be connected, the current collecting member 20 that covers the periphery of one end side of the electricity storage element 8. Further, in the electricity storage device 40, a part of the electricity storage element 8 and the current collecting member 20 are in close contact with each other by connection processing between the current collecting member 20 and the exterior case 4.

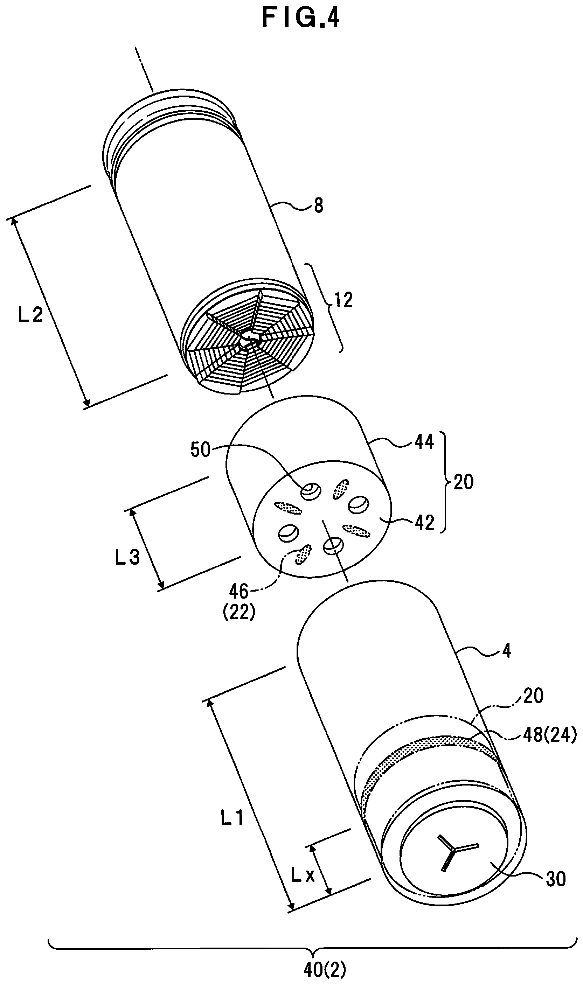

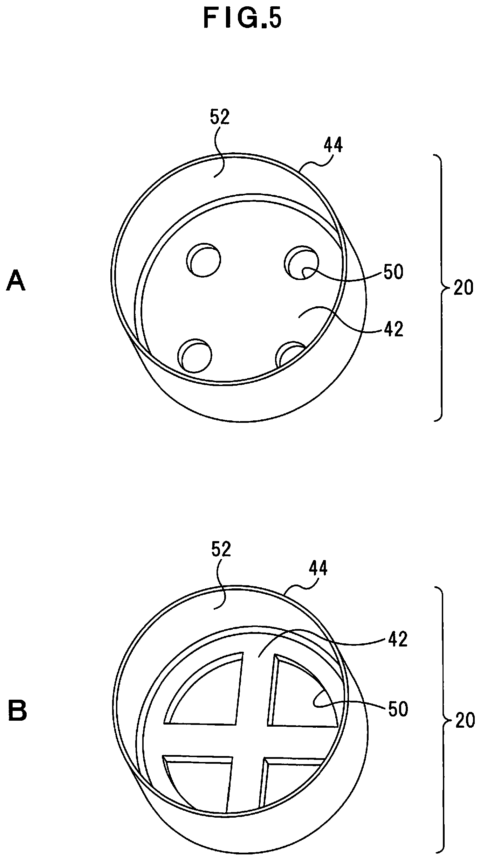

The current collecting member 20 includes, for example, a plane portion 42 that is placed on the bottom portion side of the housing portion 6 and has a connection surface to the cathode tab 12 of the electricity storage element 8, and a vertical wall portion 44 formed on the outer peripheral portion of the plane portion 42. The plane portion 42 is an example of a bottom plate portion. The current collecting member 20 forms a housing region 52 (FIG. 5) that is a space covering one end side of the electricity storage element 8 between the plane portion 42 and the vertical wall portion 44. The plane portion 42 is formed in a circular shape having a diameter equal to or close to the outer diameter of the electricity storage element 8 or the inner diameter of the housing portion 6, or a shape (FIG. 4 and FIG. 5) close to the circular shape. As a result, the current collecting member 20 is placed in the housing portion 6 with equal or near spaces along the inner wall surface of the exterior case 4, and the electricity storage element 8 can be housed in the housing region formed by the vertical wall portion 44.

In the current collecting member 20, for example, a weld portion 46 is formed by laser irradiation as a connection processing with the cathode tab 12 of the electricity storage element 8.

In the electricity storage device 40, a swaged portion 48 that presses a part of the exterior case 4 from the outside is formed as a connection processing between the exterior case 4 and the vertical wall portion 44 of the current collecting member 20. The swaged portion 48 is formed using, for example, a pressing jig such as a swage piece (not illustrated). As a result, the exterior case 4 is in close contact with the vertical wall portion 44 by partially deforming to the housing portion 6 side. Furthermore, at this time, the vertical wall portion 44 is deformed together with the exterior case 4 by the pressing of swaging to be in close contact with a part of the electricity storage element 8.

The pressing depth and the pressing strength of the swaging may be set based on the rigidity and the set deformation amount of the exterior case 4 and is adjusted to such a degree that a part of the electricity storage element 8 is not damaged by the deformation of the exterior case 4 and the vertical wall portion 44.

In the exterior case 4 in which the swaged portion 48 is formed, for example, a gap having a predetermined width is formed between the electricity storage element 8 and the inner wall surface from the tip portion of the vertical wall portion 44 or the swaged portion 48 toward the direction of the opening portion 14. For example, the electrolytic solution housed in the housing portion 6 together with the electricity storage element 8 subjected to an impregnation treatment flows into and is stored in this gap. The forming position, the length, and the volume of the gap in the housing portion 6 are determined in accordance with the length of the vertical wall portion 44 and the position of the swaged portion 48. As a result, a contact position with the electricity storage element 8 together with the position of storage and the water level of the electrolytic solution stored in the housing portion 6 are determined by the formation position of the gap. That is, in a conventional electricity storage device in which the vertical wall portion 44 and the swaged portion 48 are not formed, the electrolytic solution is only stored in the bottom portion of the housing portion 6 to the direction to be used by gravity. On the contrary, in the electricity storage device 40 of the present disclosure, the storage position of the electrolytic solution in the housing portion 6 can be set by the height of the vertical wall portion 44 and the position of the swaged portion 48, and the impregnation property of the electrolytic solution to the electricity storage element 8 can be improved.

In addition, by forming the low vertical wall portion 44 of the current collecting member 20, the outer peripheral area of the electricity storage element 8 covered by the housing region 52 of the current collecting member 20 is reduced. As a result, since the area of the electricity storage element 8 exposed in the housing portion 6 increases, the possibility of contact with the electrolytic solution can be enhanced, and the impregnation property of the electrolytic solution can be enhanced.

In the assembly processing of the electricity storage device 40, for example, a case in which the required amount of the electrolytic solution is injected into the inside of the exterior case 4 together with the housing processing of the electricity storage element 8 is included.

FIG. 4 illustrates an example of assembly processing of the electricity storage device. The processing contents and the processing procedure illustrated in FIG. 4 are examples, and the technology of the present disclosure is not limited to such a configuration. This assembly processing is an example of a method for manufacturing an electricity storage device of the present disclosure.

The assembly processing of the electricity storage device 40 includes, for example, a winding step of the electricity storage element 8 (S101), a tab forming step of the end surface of the electricity storage element 8 (S102), a connection step of the current collecting member 16 on the anode side (S103), a connection step of the current collecting member 20 on the cathode side (S104), an impregnation step of the electrolytic solution (S105), an installation step of the sealing member 26 (S106), a housing step to the exterior case 4 (S107), a sealing step of the opening portion 14 of the exterior case 4 (S108), a connection step of the exterior case 4 and the current collecting member 20 (S109), and the like.

The winding step of the electricity storage element 8 (S101): The anode foil and the cathode foil are layered through the separator, and the layered body is wound around the winding center O to form the electricity storage element 8.

The tab forming step of the end surface of the electricity storage element 8 (S102): The anode projection 32 and the cathode projection 34 are formed on one end surface of the wound electricity storage element 8 and the other end surface respectively, and the anode tab 10 and the cathode tab 12 are formed by dividing the anode projection 32 and the cathode projection 34 into a plurality of regions and performing a bending processing.

The connection step of the current collecting member 16 on the anode side (S103): the current collecting member 16 is placed on the anode tab 10, and the welding treatment is performed on the plane portion.

The connection step of the current collecting member 20 on the cathode side (S104): As illustrated in FIG. 4, for example, the current collecting member 20 is put on the electricity storage element 8 on the end portion side on which the cathode tab 12 is formed, and it is housed in the housing region 52 (FIG. 5) formed by the plane portion 42 and the vertical wall portion 44. When the cathode tab 12 is connected to the plane portion 42, the current collecting member 20 is welded and connected to, for example, the placement position of the protruding section 12B (FIG. 2) as the set position by laser irradiation. A weld portion 46 called a nugget is formed on the external side of the plane portion 42 by the welding treatment.

The impregnation step of the electrolytic solution (S105): The electricity storage element 8 to which the current collecting members 16 and 20 are connected is immersed in a treatment tank in which an electrolytic solution (not illustrated) is stored, for example, and the electrolytic solution is impregnated into the anode foil, the cathode foil, and the inside of the winding.

The installation step of the sealing member 26 (S106): To the electricity storage element 8, the sealing member 26 formed of rubber, resin material, or the like is placed on the current collecting member 16 side. In the placement processing of the sealing member 26, for example, the external terminal 18 (FIG. 1) integrally formed with the current collecting member 16 is inserted into an insertion through hole (not illustrated) to set the placement position to the current collecting member 16.

The housing step to the exterior case 4 (S107): To the opening portion 14 side of the exterior case 4, it is inserted into the housing portion 6 from the cathode tab 12 side on which the current collecting member 20 is installed. The electricity storage element 8 is inserted, for example, by the predetermined insertion amount or until the plane portion 42 of the current collecting member 20 is in contact with the bottom portion of the housing portion 6. The insertion condition of the electricity storage element 8 may be controlled using, for example, an insertion distance, a combination of a set insertion speed and its insertion time, or the like.

The sealing step of the opening portion 14 of the exterior case 4 (S108): For example, when the electricity storage element 8 is housed inside the exterior case 4, the electricity storage device 40 performs a longitudinal swaging treatment of bending the edge portion of the opening portion 14 (FIG. 1) inward, forms the swaged portion 28 by a lateral swaging treatment of pressing the exterior case 4 from the peripheral surface side in accordance with the placement position of the sealing member 26, and seals the housing portion 6.

The connection step of the exterior case 4 and the current collecting member 20 (S109): The peripheral surface side of the exterior case 4 is pressed at a placement position of the vertical wall portion 44 of the current collecting member 20 to form the swaged portion 48. In the forming processing of the swaged portion 48, a swaged position may be set, for example, using a length (depth) L1 of the housing portion 6 in a longitudinal direction, a length L2 of the electricity storage element 8 in a longitudinal direction, and a length L3 of the vertical wall portion 44. A value smaller than at least the length L3 of the vertical wall portion 44 is set as a condition of a distance Lx from the bottom portion of the housing portion 6 for the swaged position, for example. The distance Lx may be calculated, for example, in consideration of a gap generated between the bottom portion of the housing portion 6 and the plane portion 42 of the current collecting member 20, the thickness of the bottom portion 30 of the exterior case 4, and the like. The distance Lx may be set, on the basis of the length L1 of the housing portion 6, at 1/2 or less thereof, for example, or the swaged position may be set at a position closer to the bottom side, such as 1/3 or less, 1/4 or less. If the swaged position is set at the position close to the bottom, the electricity storage element 8 is fixed and held on both end portions side in the housing portion 6 by the swaged portion 28 on the opening portion 14 side and the swaged portion 48 on the bottom portion side, for example, thereby enhancing the seismic resistance of the electricity storage device 40. Since, in the electricity storage element 8, a portion closer to the bottom portion from the position where the swaged portion 48 is formed is not fixed and held to become a free end of the so-called cantilever state, it is preferable to set the swaged position near to the bottom side as much as possible.

In addition, the length L3 of the vertical wall portion 44 may be formed to have a length of 1/2 or less or a length of 1/3 or less of the length L1 of the housing portion 6 as standard, for example. In the electricity storage device 40, for example, the length L3 of the vertical wall portion 44 may be determined according to the forming position of the set swaged portion 48, or the forming position of the swaged portion 48 may be determined based on the length L3 of the vertical wall portion 44.

### <Configuration of Current Collecting Member 20>

As illustrated in FIGS. 5A and 5B, for example, the current collecting member 20 is formed in a bottomed cylindrical shape with the plane portion 42 as the bottom portion, and the housing region 52 covering a part of the electricity storage element 8 is formed inside the vertical wall portion 44. A plurality of opening portions 50 are formed in the plane portion 42, for example. The opening portion 50 is an example of an opening of the present disclosure and is formed with a set area or diameter in a portion where no welding treatment is performed with the cathode tab 12 in the plane portion 42. That is, in the current collecting member 20, the plurality of opening portions 50 are formed on the plane portion 42, which is the bottom plate portion, at a position separated from the center portion by a predetermined distance. For example, the opening portion 50 allows the electrolytic solution to pass through when the electricity storage element 8 is inserted into the housing portion 6 and functions as a flow path for allowing electrolytic solution vaporized in the housing portion 6 to flow to the valve mechanism side of the bottom portion 30 of the exterior case 4. The opening portion 50 may be formed of a circular shape having a predetermined diameter, as illustrated in FIG. 5A, for example, and may open a portion other than the welding region with the cathode tab 12 and the connection portion with the vertical wall portion 44. Further, the plurality of opening portions 50 may be formed on the outer peripheral side of the central portion of the plane portion 42, for example. As a result, the electrolytic solution is easily spread in the cylindrical housing region 52 in the impregnation treatment of the electrolytic solution after integration with the current collecting member 20; consequently, the electricity storage element 8 is enhanced in the impregnation property of the electrolytic solution.

That is, the current collecting member 20 is connected to the electricity storage element 8 before the impregnation treatment of the electrolytic solution is performed. The end surface on the cathode tab 12 side and a part of the element side surface of the electricity storage element 8 are placed in the housing region 52 of the current collecting member 20. Since the outer diameter of the electricity storage element 8 and the diameter of the housing region 52 of the current collecting member 20 are formed so that they are substantially equal, and the cathode tab 12 and the plane portion 42 are in close contact with each other by welding, a gap is hardly formed between the surface of the electricity storage element 8 and the plane portion 42 and between the surface of the electricity storage element 8 and the vertical wall portion 44 in the housing region 52. On the contrary, if a method that the electricity storage element 8 provided with the plurality of opening portions 50 on the outer peripheral side of the central portion of the plane portion 42 is immersed in the electrolytic solution stored in the treatment tank (not illustrated) as the impregnation treatment is used, for example, the electrolytic solution easily flows into the housing region 52 from the opening portion 50, and in particular, the impregnation property of the electrolytic solution on the peripheral surface portion of the cathode tab 12 adjacent to the plane portion 42 and the vertical wall portion 44 is enhanced.

### <Effect of Second Embodiment>

According to such a configuration, any of the following effects can be obtained.
(1) The same effect as that of the first embodiment can be obtained.
(2) Since a part of the electricity storage element 8 covered by the housing region 52 of the current collecting member 20 is held by swaging and connecting the exterior case 4 at a position overlapping the vertical wall portion 44 of the current collecting member 20, the vibration resistance of the electricity storage device 40 can be improved.
(3) Since it is not necessary to impregnate the electrolytic solution after housing the electricity storage element 8 in the exterior case 4, the electrolytic solution can be impregnated with the electricity storage element 8 on which the current collecting member 20 or the like is mounted, so that manufacturing facilities or a product itself can prevent contamination due to adhesion of the electrolytic solution, crystallization of electrolyte, or the like.
(4) The impregnation property of the electrolytic solution to the electricity storage element 8 to which the current collecting member 20 is connected can be enhanced by the forming position, area, and the number of openings of the opening portion 50 formed in the current collecting member 20.

### [Third Embodiment]

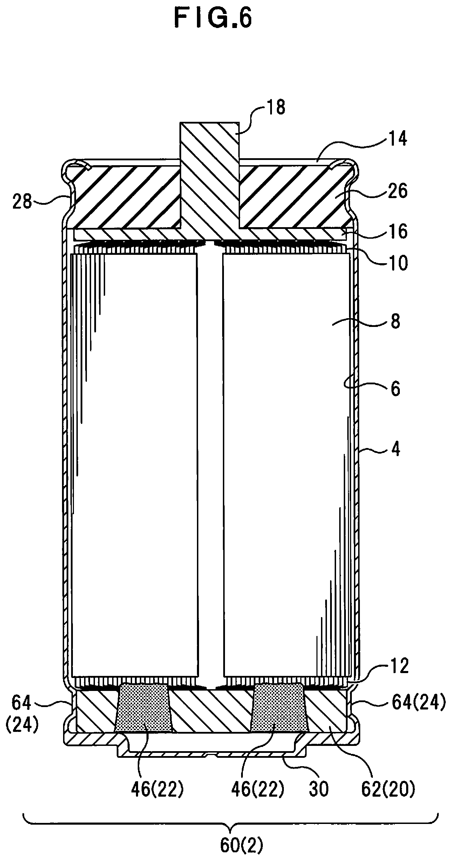

FIG. 6 illustrates a configuration example of an electricity storage device according to a third embodiment. The configuration shown in FIG. 6 is an example, and the technology of the present disclosure is not limited to such a configuration. In FIG. 6, the same portions as those of FIGS. 1 and 3 are denoted by the same reference numerals.

An electricity storage device 60 according to this embodiment indicates a case where the current collecting member 20 formed only from a plane portion 62 is used, a surface, which faces the cathode tab 12 of the electricity storage element 8, of the current collecting member 20 is connected, and an outer peripheral surface of the plane portion 62 is in contact with and is connected to the inner wall surface of the exterior case 4. As illustrated in FIG. 6, for example, the electricity storage device 60 forms a swaged portion 64 by pressing a placement position of the plane portion 62 from the outer peripheral side of the exterior case 4 as a connection portion between the exterior case 4 and the current collecting member 20.

In addition, the electricity storage device 60 may form a welded portion by irradiating the placement position of the plane portion 62 with a laser from the outer peripheral side of the exterior case 4, for example. In the case of performing this welding treatment, in order to prevent boiling of the electrolytic solution, for example, output of the laser may be reduced, irradiation time may be set long, and an irradiation area of the laser may be reduced to minimize a heat transfer to the electrolytic solution in the housing portion 6.

The plane portion 62 of the current collecting member 20 according to this embodiment is formed to have a larger thickness than the plane portions shown in the other embodiments, for example. The plane portion 62 may be set wider than thickness of a jig for forming the swaged portion 64, for example. As a result, the swaged portion 64 has the pressing portion of which the whole or substantially whole is formed on the plane portion 62. As a result, the damage or deformation of the cathode tab 12 is suppressed by preventing the pressing force from acting on the cathode tab 12 of the electricity storage element 8 or by suppressing the action of the pressing force.

Further, the plane portion 62 is formed so as to have a diameter equal to or substantially equal to the inner diameter of the housing portion 6, the pressing force by swaging does not act on the electrolytic solution stored in the housing portion 6, and the heat by the welding treatment is cut off by the plane portion 62.

### <Effect of Third Embodiment>

According to such a configuration, any of the following effects can be obtained.
(1) The same effect as that of the first embodiment can be obtained.
(2) The same effect as that of the assembly processing of the electricity storage device 40 shown in the second embodiment can be obtained.
(3) The current collecting member 20 formed only from the plane portion 62 can be connected to the electricity storage element 8 and the exterior case 4 on different surfaces.
(4) By forming the plane portion 62 thicker, it is possible to suppress or avoid effects such as deformation of the end portion side of the electricity storage element 8 and the deterioration of the electrolytic solution due to welding.

### [Modified Example]

For the embodiments described above, the features and modifications thereof are listed below.
(1) In the above embodiments, a case where the cathode side of the electricity storage element 8 is connected to the exterior case 4 through the current collecting member 20 is presented, but it is not limited thereto. In the electricity storage device 2 of an axial structure, the anode side of the electricity storage element 8 may be placed on the bottom side of the housing portion 6 and connected to the exterior case 4 through the current collecting member 20.
(2) In the above embodiments, as to a case where the swaged portion 48 or 64 is formed in the exterior case 4 to be connected to the current collecting member 20, a case where it is swaged along the peripheral surface of the exterior case 4 without a break is presented, but it is not limited thereto. The swaged portions 48 and 64 may connect the exterior case 4 and the current collecting member 20 by swaging with a predetermined length and number in accordance with the position of the vertical wall portion 44 or the plane portion 62 of the current collecting member 20.
(3) In the above embodiments, as to the setting of the formation positions of the swaged portions 48 and 64, the case where the distance from the bottom side of the housing portion 6 is referred as a standard is presented, but it is not limited thereto. For the swaged position, any calculation and setting processing of techniques capable of specifying the placement position of the vertical wall portion 44 and the plane portion 62 placed in the housing portion 6 may be used.
(4) In the above embodiments, an opening portion may be formed in a part of the vertical wall portion 44 of the current collecting member 20. The opening portion is formed at least other than the forming position of the swaged portion 48, and the opening diameter and the opening shape may be anything. By forming the opening portion in the vertical wall portion 44, in the impregnation treatment of the electrolytic solution to the electricity storage element 8 integrated with the current collecting member 20, the electrolytic solution can be made to flow to the electricity storage element 8 side through the opening portion of the vertical wall portion 44, and a workability of the impregnation treatment and the impregnation property to the electricity storage element 8 can be improved.
(5) In the above embodiments, as the connection surface portion 24 for connecting the current collecting member 20 and the exterior case 4, a case where the exterior case 4 is pressed and deformed from the outside by swaging treatment is presented, but it is not limited thereto. For example, the electricity storage device 2 may be connected by performing the welding treatment to the placement position of the vertical wall portion of the current collecting member 20 from the outer peripheral surface of the exterior case 4 as the forming processing of the connection surface portion 24. In this case, in the welding treatment, for example, a welding temperature and a welding method may be adjusted so that the inside of the housing portion 6 is not exposed to the outside by a hole generated by the welding heat at a welding place on the surface of the exterior case 4 or a peripheral edge portion thereof.

As described above, the most preferred embodiment and the like of the present disclosure have been described. The technology of the present disclosure is not limited to the above description. Various modifications and changes can be made by those skilled in the art based on the gist of the invention described in the claims or disclosed in the mode(s) for carrying out the invention. It goes without saying that such modifications and changes are included in the scope of the present invention.

### Industrial Applicability

According to the electricity storage device of the present disclosure and the method for manufacturing thereof, a connection portion between the electricity storage element and the exterior case is not formed on the same surface of the current collecting member in the electricity storage device having an axial structure using a part of the case in which the electricity storage element is accommodated as an external terminal, thereby preventing a decrease in connection strength and a decrease in workability of manufacturing processing, and it is useful.

### Reference Signs List

2, 40, 60 electricity storage device
4 exterior case
6 housing portion
8 electricity storage element
10 anode tab
10A, 12A first section
10B, 12B second section
12 cathode tab
14, 50 opening portion
16, 20 current collecting member
18 external terminal
22, 24 connection surface portion
26 sealing member
28, 48, 64 swaged portion
30 bottom portion
32 anode projection
34 cathode projection
42, 62 plane portion
44 vertical wall portion
46 weld portion
52 housing region

## Claims

1. An electricity storage device comprising:
an electricity storage element in which an electrode portion having a different polarity is formed on each of end surfaces of electrode foils that are layered and wound;
a case having a housing portion housing the electricity storage element therein; and
a current collecting component including a first connection surface portion placed on a bottom portion side of the housing portion and connected to the electrode portion formed on one end surface of the electricity storage element, and a second connection surface portion connected to an inner wall surface of the case in the housing portion.

2. The electricity storage device according to claim 1, wherein the current collecting component includes
the first connection surface portion that is connected to the electrode portion by welding treatment, and
the second connection surface portion that is connected to the inner wall surface of the case by swaging treatment or welding treatment to an outer peripheral portion of the case.

3. The electricity storage device according to claim 1 or claim 2, wherein the current collecting component is formed in a bottomed cylindrical shape and includes a bottom plate portion covering the one end surface of the electricity storage element and a vertical wall portion covering a part of a side surface of the electricity storage element.

4. The electricity storage device according to claim 1 or 2, wherein the second connection surface portion is formed in a range of 1/2 or less of a length in the housing portion from the bottom portion side along the inner wall surface of the case.

5. The electricity storage device according to claim 3, wherein the current collecting component has an opening formed in a part of the bottom plate portion.

6. A method for manufacturing an electricity storage device, the method including:
a step of layering and winding electrode foils and forming an electricity storage element having an electrode portion having a different polarity on each of end surfaces of the wound electrode foils;
a step of placing a current collecting component on one end surface of the electricity storage element and connecting the electrode portion and a first connection surface portion of the current collecting component;
a step of housing, in a housing portion of a case, the current collecting component and the electricity storage element that are connected; and
a step of connecting an inner wall surface of the case and a second connection surface portion of the current collecting component in the housing portion.

7. The method for manufacturing the electricity storage device according to claim 6, the method including:
a step of connecting the first connection surface portion and the electrode portion by welding treatment from a back side of the first connection surface portion; and
a step of connecting the second connection surface portion and the inner wall surface of the case by swaging treatment or welding treatment to an outer peripheral portion of the case.

8. The method for manufacturing the electricity storage device according to claim 6 or claim 7, the method further including:
a step of impregnating electrolytic solution into the electricity storage element after connecting the electrode portion and the first connection surface portion of the current collecting component; and
a step of housing the electricity storage element in the housing portion of the case after impregnating the electrolytic solution.
